(19) Europäisches Patentamt
European Patent Office
Office européen des brevets

(11) Publication number: 0 089 147 B1

(12) # EUROPEAN PATENT SPECIFICATION

(45) Date of publication of patent specification: 16.06.87

(51) Int. Cl.⁴: C 10 L 1/32

(21) Application number: 83301139.8

(22) Date of filing: 03.03.83

(54) **Emulsions of hydrocarbons and water and/or alcohol, and emulsifying preparations therefor.**

(30) Priority: 12.03.82 AU 3086/82
30.11.82 AU 7052/82

(43) Date of publication of application:
21.09.83 Bulletin 83/38

(45) Publication of the grant of the patent:
16.06.87 Bulletin 87/25

(84) Designated Contracting States:
AT BE CH DE FR GB IT LI LU NL SE

(56) References cited:
EP-A-0 007 731

**The file contains technical information submitted after the application was filed and *not included in this specification***

(73) Proprietor: APACE RESEARCH LIMITED
Hawkesbury Agricultural College
Richmond New South Wales (AU)

(72) Inventor: Reeves, Russell Robert Apace
Research Limited
Hawkesbury Agricultural College
Richmond New South Wales (AU)

(74) Representative: Austin, Hedley William et al
A.A. THORNTON & CO. Northumberland House
*303-306 High Holborn*
London WC1V 7LE (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 089 147 B1

**Description**

The present invention is concerned with emulsions of hydrocarbons and water and/or alcohols, and emulsifying preparations suitable for forming such emulsions.

It is known that emulsions of liquid hydrocarbons and water or solutions of water and alcohols can be formed using a variety of emulsifiers. These emulsions have been proposed for use as fuels and for other purposes. While the properties required from an emulsion will vary in accordance with the use to which it is to be put, in general the known emulsions have not been satisfactory as fuels for any one of a number of reasons. These include instability of the emulsion, high cost of the emulsifier, the quantity of emulsifier required to produce the emulsion and the formation of polluting emissions when the emulsion is burnt.

The present invention relates to emulsions and emulsifiers which overcome at least some of the short-comings of the previously known emulsions and emulsifiers. It is not necessary that all of the emulsions or emulsifiers within the scope of this invention overcome all of the difficulties encountered in the past. Emulsions of only short term stability might, for example, be useful in a situation where the emulsion is formed only shortly before use and a high priced emulsifier may be acceptable if it is used in small quantities.

According to one aspect of the present invention, there is provided an emulsion consisting of a phase comprising liquid hydrocarbon, a phase comprising an alcohol or an alcohol and water, and an emulsifier, characterised in that the emulsifier is a block copolymer comprising at at least one block (A) comprising a polymer of:

(i) an optionally ring-substituted styrene, or

(ii) a conjugated diene,

and at least one block (B) comprising:

(i) a polyether of the formula $H-(-OR-)_n-OH$, where R is a bivalent aliphatic hydrocarbon moiety having form 1 to 4 carbon atoms and n is an integer of from 4 to 4000, or

(ii) a polymer of a polar olefin, the polarity of the olefin being such that the polymer thereof is solvated by water and/or alcohol.

According to another aspect of the invention, there is provided an emulsion consisting of a phase comprising a gasoline having a boiling point of less than 190°C, a kerosene having a boiling point of from 190 to 230°C, a diesel oil having a boiling point of from 230 to 315°C, a gas oil having a boiling point of from 315 to 480°C, or a hydrocarbon liquid having a boiling point of greater than 480°C, a phase comprising water and/or an alcohol, and an emulsifier, characterised in that the emulsifier is a block copolymer comprising at least one block (A) comprising a polymer of:

(i) an optionally ring-substituted styrene, or

(ii) a conjugated diene,

and at least one block (B) comprising:

(i) a polyether of the formula $H-(-OR-)_n-OH$ where R is a bivalent aliphatic hydrocarbon moiety having from 1 to 4 carbon atoms and n is an integer of from 4 to 4000, or

(ii) a polymer of a polar olefin, the polarity of the olefin being such that the polymer thereof is solvated by water and/or alcohol.

The invention further includes an emulsifying preparation suitable for forming an emulsion according to the invention.

The term "alcohol" is used herein to refer to methanol or ethanol or mixtures thereof and the term "liquid hydrocarbon" to refer to all liquid fractions obtained from petroleum crude oil and synthetic liquid hydrocarbons obtained from the processing of gaseous or solid hydrocarbons. The term "block copolymer" is used herein to refer to a copolymer comprising at least one plurality of contiguous monomeric units of a first type connected at an end or at any other point along its length to at least one plurality of contiguous monomeric units of a second type.

The present invention is concerned with two types of emulsions, *viz.* water and/or alcohol in hydrocarbon emulsions which comprise a dispersed phase comprising water and/or alcohol and a continuous phase comprising hydrocarbon liquid, hereinafter referred to as AW/D-type emulsions, and hydrocarbon in water and/or alcohol emulsions which comprise a dispersed phase comprising hydrocarbon liquid and a continuous phase comprising water and/or alcohol, hereinafter referred to as D/AW-type emulsions.

The non-hydrocarbon phase of the emulsions according to the present invention preferably comprises either water and no alcohol, or alcohol which contains from 0 to 10% by volume of water. With water as the non-hydrocarbon phase, the emulsions of the invention may be used as fuels which under certain circumstances show improved combustion efficiency over the unemulsified hydrocarbon liquid. With aqueous alcohol as the non-hydrocarbon phase, the emulsions may be used as fuels in which the alcohol contributes to the calorific value of the fuel.

The hydrocarbon liquid is preferably selected from gasolines which have boiling points below 190°C, kerosenes which have boiling points of from 190° to 230°C, diesel oils which have boiling points of from 230° to 315°C, and gas oils which have boiling points of from 315° to 480°C. The present invention is particularly suitable for preparing emulsions in which one phase comprises high boiling point kerosenes, diesel oils, or low boiling point gas oils, and the other phase comprises alcohol with or without the presence of water, and emulsions in which one phase comprises diesel oils, gas oils, or hydrocarbon liquids having boiling points above 480°C, and the other phase comprises water.

The proportions of water and/or alcohol to hydrocarbon liquid in the emulsions of the invention may vary over wide limits. The nature of the emulsion, i.e. whether it is an AW/D-type

emulsion or a D/AW-type emulsion, will depend to a considerable extent on the relative proportions of the hydrocarbon liquid and the water and/or alcohol. Water contents of up to 10% by volume are preferred for non-alcohol containing emulsions. For alcohol containing emulsions, an alcohol and water content of from 10 to 30% by volume is preferred.

As indicated above, the copolymer comprising the emulsifier used to form the emulsions of the present invention comprises at least one block (A) comprising a polymer of an optionally ring-substituted styrene or a polymer of a conjugated diene, and at least one block (B) comprising a polyether of the formula $H{-}(OR){_n}OH$, where R and n are as defined earlier, or a polymer of a polar olefin having sufficient polarity that the resulting polymer is solvated by water and/or alcohol.

Styrene itself is particularly preferred as an A-block monomer. Preferred ring-substituted sytrenes are those in which the substituents contain only carbon, hydrogen, or oxygen; of these, styrenes having an aliphatic substituent, preferably saturated, containing up to 4 carbon atoms are particularly preferred.

Preferred conjugated dienes for preparing the A-block polymer include, for example, butadiene and isoprene.

Preferred polyethers for the B-block polymer are those having a molecular weight of from 200 to 150,000. Short chain polyethers having a molecular weight of from 5000 to 15000 and an n value of from 110 to 340 are particularly preferred.

Prior to connecting the polyether to the A-block monomer to form the block copolymer, the polyether molecule may be esterified at one end to produce a half-ester. The presence of the terminal half-ester prevents the A-block monomer being grafted to the esterified end of the polyether block. The esterification is also believed to enhance the affinity of the polyether block(s) of the copolymer for the water and/or alcohol phase of the emulsion. Preferred half-esters are those in which the polyether is esterified with acetic acid or acetic anhydride.

Other polyethers which may be used instead of the half-esters include the water-soluble polyoxyalkylene glycol ether group of compounds sold under the trade name "ICINOL" (Registered Trade Mark), which have the formula:

$$R{-}(OCH_2CH_2){_n}OH$$

where R is methyl or ethyl and n is an integer of from 5 to 3400.

Preferred polar olefins for preparing the B-block polymer include vinyl acetate, vinyl alcohol, and acrylates such as alkyl methacrylates. Of the alkyl methacrylates, the methyl and ethyl derivatives are particularly preferred.

The block copolymer comprising the emulsifier of the present invention can comprise a single polymeric block of each type of monomer, i.e. one A-block and one B-block, or there can be more than one block of one or both types. Any one block can contain one or more different monomers of the specified type. It is preferred that the two types of monomers are present in the block copolymer in a weight ratio of from 1:5 to 5:1, more preferably 1:2 to 2:1. The block copolymer may include polymeric species other than those described above provided the essential character of the block copolymer is not changed. It has been found, for example, that a block of propylene oxide polymer of up to 20% by weight of the B-block polymer can be included in the block copolymer.

It is believed that upon the formation of the emulsions the B-block polymer is solvated by the water and/or alcohol phase and the A-block polymer is solvated by the hydrocarbon liquid phase. Many of the emulsions according to this invention have only short term stability. This is believed to be due, in the case of AW/D-type emulsions, to the failure of the solvated A-block polymer of the emulsifier to couple with the excess hydrocarbon liquid or, in the case of D/AW emulsions, of the solvated B-block polymer of the emulsifier to couple with the excess water or alcohol. The natural density difference between the hydrocarbon liquid and the water and/or alcohol will lead to a settling or rising of the dispersed phase. The essentially non-labile nature of the surfactant may be observed as the dispersed phase does not coalesce but remains dispersed notwithstanding the rising or settling that has taken place.

The stability of the emulsions according to the invention may be enhanced by adding to the emulsion a coupling agent which is soluble in the continuous phase of the emulsion and substantially insoluble in the dispersed phase and which will couple with the polymer block(s) of the emulsifier copolymer which is solvated by the continuous phase. The exact nature of the coupling between the emulsifier copolymer and the coupling agent is not known. It is probably by way of the formation of strong polar or hydrogen bonds between the polymer blocks of the copolymer in the continuous phase of the emulsion.

The preferred coupling agents for use in the AW/D-type emulsions of the present invention are block or random copolymers of butadiene and styrene. The copolymers of butadiene and styrene which are particularly preferred are those containing butadiene and styrene in a weight ratio of at least 2:1, more preferably at least 3:1. The preferred molecular weight of the butadiene/styrene copolymers is from 50,000 to 500,000, more preferably from 80,000 to 350,000. The butadiene/styrene copolymers sold under the Registered Trade Marks Solprene 1204 and Solprene 1205 are particularly suitable for use as coupling agents in the AW/D-type emulsions of the invention.

Coupling agents which are particularly suitable for use in the D/AW-type emulsions of the present invention are the copolymers of ethylene oxide-vinyl acetate and ethylene oxide-vinyl alcohol. It has also been noted that an increased proportion of water in the alcohol phase lends stability of the D/AW-type emulsions of the invention.

The block copolymer comprising the emulsifier and the copolymer comprising the coupling agent are preferably present in the emulsion in a weight ratio of from 1:3 to 3:1, more preferably 2.3:1.

The properties of the emulsion according to this invention will depend to some extent upon the method used to physically form the emulsion. In some cases simple shaking may be sufficient; in other cases mechanical mixing or homogenisation is preferred.

The block copolymer comprising the emulsifier and the copolymer comprising the coupling agent may be added to the mixture of ingredients to the emulsified as pure or essentially pure compounds. It is, however, preferred to add these copolymers as "active solutions", that is as solutions containing the reaction ingredients from which the copolymers are formed. This technique facilitates dispersion of the copolymers in the emulsion, avoids handling solid materials, and avoids solvent recovery problems.

The block copolymer comprising the emulsifier is preferably added to the emulsion ingredients in an amount of from 0.1% w/v to 1% w/v. The copolymer comprising the coupling agent is preferably added in an amount of from 0.1% w/v to 0.5% w/v. The exact amounts will depend upon the method of mixing the emulsion and the emulsion ingredients. For example, for a mixture of 20% by volume of aqueous ethanol comprising 5% by volume of water and 80% by volume of automotive distillate, simple manual shaking requires 0.6% w/v of an acetylated poly(ethylene oxide-styrene) block copolymer and 0.2% w/v of Solprene 1205. When a medium speed low shear stirrer is used, however, only 0.39% w/v of the acetylated block copolymer and 0.17% w/v of Solprene 1205 are required.

In order that the invention may be more fully understood, the following examples are given by way of illustration only.

Example 1

Polyethylene oxide of molecular weight 6,000 (180 grams) was dissolved in BTX (169 parts benzene, 27 parts toluene, 4 parts zylene) (280 mls) by slight warming in a 1-litre, three-necked, round-bottom flask mounted in a heating mantle. Benzoyl peroxide (14g) was then added and the mixture refluxed for 20 minutes. After this time, benzoyl peroxide (19 grams) dissolved in styrene 199 ml) and ethyl acetate (15 ml) was added dropwise to the refluxing mixture at a drop rate of approx. 2 drops per second. After addition of the styrene was complete, refluxing of the reaction mixture was continued for a further 60 minutes; the mixture was then allowed to cool to room temperature. The resultant block copolymer reaction mixture contained 0.553...g polymers/ml and 0.43 ml BTX/ml. This reaction mixture solution was used as an "active solution" without further work-up.

Example 2

A suitable butadiene-styrene copolymer for use as a coupling agent with the emulsifier solution of Example 1 for preparing AW/D-type emulsions was obtained by dissolving 220 g of Solprene 1205 in 500 ml of a 1:1 mixture of BTX and automotive distillate.

The resulting solution comprised:

0.304 g copolymer/ml
0.345 ml automotive distillate/ml
0.345 ml BTX/ml

Example 3

For the preparation of an ethanol/distillate AW/D-type emulsion comprising 15% by volume of aqueous ethanol comprising 5% by volume of water, a suitable emulsifying preparation was prepared by first mixing 2.71 litres of the poly(ethylene oxide-styrene) block copolymer emulsifier solution of Example 1 with 2.5 litres of the poly)butadiene-styrene) copolymer coupling agent solution of Example 2 and 2 litres of automotive distillate.

The resulting emulsifying preparation solution comprised:

312 g emulsifying preparation/litre
397 ml automotive distillate/litre
281 ml BTX/litre

The ratio of poly(ethylene oxide-styrene) block copolymer of poly(butadiene-styrene) copolymer in the emulsifying preparation solution was 2:1.

Approximately 100 litres of a 15% ethanol/distillate emulsion was then prepared as follows:

To 84.24 litres of automotive distillate was added, with stirring, 1.92 litres of the emulsifying preparation solution. Fifteen litres of aqueous ethanol comprising 5% by volume of water was then added to the distillate/emulsifying preparation mixture with rapid stirring. The resulting ethanol/distillate emulsion was stirred rapidly for a further three minutes to ensure uniform dispersion of the aqueous ethanol throughout the continuous distillate phase.

The resulting ethanol/distillate emulsion, which contained approx. 0.6% w/v or 6 g of emulsifying preparation per litre of emulsion, showed good stability and was used as fuel for a diesel engine (Example 4).

Example 4

A fully instrumented Perkins 6.354.4 diesel engine mounted on a Schenk Model No. WS 450 dynamometer was tested using the emulsion fuel of Example 3. All the monitored parameters indicated that the thermodynamic performance of the unmodified engine were satisfactory over the entire speed-load range. Compared with operation of the same engine on 100% automotive distillate, power and torque output were reduced by approx. 5% thermal efficiency increased by approx. 2%, and exhaust temperatures were lower $NO_x$ emissions were dramatically

decreased when the engine was operated on the emulsion fuel. In durability trials with the same engine using the emulsion fuel, there was no noticeable adverse effect on engine components or fuel injection equipment.

Unmodified diesel engines have been shown to give satisfactory performance when operated on AW/D-type emulsion fuel containing up to 20% by volume of aqueous alcohol.

Example 5

Polyethylene glycol of molecular weight 6,000 (180 g) was dissolved in pyridine (150 ml) by slight warming in a 1-litre, three-necked, round-bottom flask mounted in a heating mantle. The solution was refluxed and all residual water was removed. Acetic anhydride (2.82 ml, $3 \times 10^{-2}$ moles) was then added and the solution refluxed for 15 minutes.

Benzoyl peroxide (14.0 g) was then added and the mixture refluxed for a further 20 minutes.

After this time, benzoyl peroxide (18.0 g) dissolved in styrene (199 ml) and ethyl acetate (15 ml) was added dropwise to the refluxing mixture at a drop rate of approx. 2 drops per second.

After addition of the styrene was complete, the mixture was cooled to approx. 10°C by swirling the flask in an ice bath. The mixture was then poured in to diethyl ether (approx. 2 litres) at approx. 0°C (ice-NaCl bath) and stirred vigorously with a stirring rod until the product was precipitated as a finely divided solid.

The product was then filtered off on a Buchner funnel, washed with a little cold diethyl ether, and dried under reduced pressure at room temperature.

314 g of product was obtained, which was used without further purification.

This Example provided the esterified copolymer in the form of a finely divided solid, but an active solution could have been prepared. This procedure results in random esterification and there is not 100% formation of the half-ester.

The above Examples are concerned with emulsions of the AW/D-type. While emulsions of this type currently have more commercial applications, the emulsifiers according to the present invention may also be used to produce emulsions of the D/AW-type.

The preferred D/AW-type emulsions for use as fuels are those containing 50% by volume or greater of aqueous alcohol.

However, successful use of these D/AW-type emulsion fuels requires either substantial modifications to the diesel engine or the addition of the suitable cetane/ignition improver to the emulsion fuel in order to improve its auto-ignition properties.

**Claims**

1. An emulsion consisting of a phase comprising liquid hydrocarbon, a phase comprising an alcohol or an alcohol and water, and a emulsifier, characterised in that the emulsifier is a block copolymer comprising at least one block (A) comprising a polymer of:

(i) an optionally ring-substituted styrene, or

(ii) a conjugated diene,

and at least one block (B) comprising:

(i) a polyether of the formula $H-(-OR-)_n-OH$, where R is a bivalent aliphatic hydrocarbon moiety having from 1 to 4 carbon atoms and n is an integer of from 4 to 4000, or

(ii) a polymer of a polar olefin, the polarity of the olefin being such that the polymer thereof is solvated by water and/or alcohol.

2. An emulsion consisting of a phase comprising a gasoline having a boiling point of less than 190°C, a kerosene having a boiling point of from 190 to 230°C, a diesel oil having a boiling point of from 230 to 315°C, a gas oil having a boiling point of from 315 to 480°C, or a hydrocarbon liquid having a boiling point of greater than 480°C, a phase comprising water and/or an alcohol, and an emulsifier, characterised in that the emulsifier is a block copolymer comprising at least one block (A) comprising a polymer of:

(i) an optionally ring-substituted styrene, or

(ii) a conjugated diene.

and at least one block (B) comprising:

(i) a polyether of the formula $H-(-OR-)_n-OH$, where R is a bivalent aliphatic hydrocarbon moiety having from 1 to 4 carbon atoms and n is an integer of from 4 to 4000, or

(ii) a polymer of a polar olefin, the polarity of the olefin being such that the polymer thereof is solvated by water and/or alcohol.

3. An emulsion according to claim 1 to 2, in which the phase comprising water and/or an alcohol which contains from 0 to 10% volume of water.

4. An emulsion according to any one of claims 1 to 3, in which the phase comprising water and/or alcohol is substantially free of alcohol, is present in an amount of from 1% to 10% by volume of the emulsion, and forms the dispersed phase of said emulsion.

5. An emulsion according to any one of claims 1 to 4, in which the liquid hydrocarbon has a boiling point of from 190 to 480°C.

6. An emulsion according to any of claims 1 to 5, in which the block copolymer comprises a single block of polystyrene and a single block of polyether.

7. An emulsion according to any of claims 1 to 6, in which the block copolymer comprises at least two blocks of polystyrene or at least two blocks of polyether.

8. An emulsion according to claim 6 or 7, in which the ratio by weight of polystyrene to polyether is from 1:5 to 5:1.

9. An emulsion according to any of claims 6 to 8, in which the polyether block(s) has an n value of from 110 to 340.

10. An emulsion according to any of claims 6 to 9, in which the polyether block(s) is esterified at one end prior to connection with the styrene monomer.

11. An emulsion according to any of claims 1 to 4, in which polymer block(s) A is a polymer of butadiene or isoprene.

12. An emulsion according to any of claims 1 to 5, in which polymer block(s) B is a polymer of vinyl acetate, vinyl alcohol, or an alkyl methacrylate.

13. An emulsion according to any of claims 1 to 12, which further comprises a coupling agent which is soluble in the continuous phase of the emulsion and substantially insoluble in the dispersed phase thereof, and which couples with the polymer block(s) of the copolymer which is solvated by the continuous phase of the emulsion.

14. An emulsion according to claim 13, in which the emulsifier and the coupling agent are present in a ratio by weight of from 1:3 to 3:1.

15. An emulsion according to claim 13 or 14, in which the coupling agent is a butadiene-styrene, ethylene oxide-vinyl acetate, or ethylene oxide-vinyl alcohol copolymer.

16. An emulsion according to claim 15, in which the coupling agent is a butadiene-styrene copolymer having a molecular weight of from 50,000 to 500,000.

17. An emulsion according to claim 15 or 16, in which the ratio by weight of butadiene to styrene in the copolymer of the coupling agent is at least 2:1.

18. An emulsion according to any of claims 1 to 17, in which the emulsifier is present in an amount of from 0.1% to 1% w/v of emulsion and the coupling agent, if present, is in an amount of from 0.1% to 0.5% w/v of emulsion.

19. An emulsifying preparation suitable for forming an emulsion comprising a phase comprising liquid hydrocarbon and a phase comprising water and/or alcohol, which comprises an emulsifier as deined in any of claims 1 to 12 and a coupling agent as defined in any of claims 13 to 17.

**Patentansprüche**

1. Emulsion, bestehend aus einer einen flüssigen Kohlenwasserstoff umfassenden Phase, einer einen Alkohol oder einen Alkohol und Wasser umfassenden Phase und einem Emulgator, dadurch gekennzeichnet, daß der Emulgator ein Blockcopolymer ist, umfassend mindestens einen block (A), umfassend ein Polymer aus:

(i) einem wahlweise ringsubstituierten Styrol oder

(ii) einem konjugierten Dien,

und mindestens einen Block (B), umfassend

(i) einen Polyether der Formel $H{+}OR{+}_nOH$, worin R einen zweiwertigen, aliphatischen Kohlenwasserstoffteil mit 1 bis 4 Kohlenstoffatomen und n eine genze Zahl von 4 bis 4000 bedeuten oder

(ii) ein Polymer aus einem polaren Olefin, wobei die Polarität des Olefins derart ist, daß dessen Polymer durch Wasser und/oder Alkohol solvatisiert wird.

2. Emulsion, bestehend aus einer ein Benzin mit einem Siedepunkt von weniger als 190°C, ein Kerosin mit einem Siedepunkt von 190 bis 230°C, ein Dieselöl mit einem Siedepunkt von 230 bis 315°C, ein Gasöl mit einem Siedepunkt von 315 bis 480°C oder ein Kohlenwasserstofflüssigkeit mit einem Siedepunkt von mehr als 480°C umfassenden Phase, eine Wasser und/oder einen Alkohol umfassende Phase und einem Emulgator, dadurch gekennzeichnet, daß der Emulgator ein Blockcopolymer ist, umfassend mindestens einen Block (A), umfassend ein Polymer aus:

(i) einem Wahlweise ringsubstituierten Styrol oder

(ii) einem konjugierten Dien,

und mindestens einen Block (B), umfassend

(i) einen Polyether der Formel $H{+}OR{+}_nOH$, worin R einen zweiwertigen, aliphatischen Kohlenwasserstoffteil mit 1 bis 4 Kohlenstoffatomen und n eine ganze Zahl von 4 bis 4000 bedeuten oder

(ii) ein Polymer aus einem polaren Olefin, wobei die Polarität des Olefins derart ist, daß dessen Polymer durch Wasser und/oder Alkohol solvatisiert wird.

3. Emulsion nach Anspruch 1 oder 2, wobei die Wasser und/oder einen Alkohol umfassende Phase 0 bis 10 Volumenprozent Wasser enthält.

4. Emulsion nach einem der Ansprüche 1 bis 3, wobei die Wasser und/oder Alkohol umfassende Phae im wesentlichen alkoholfrei ist, in einer Menge von 1 bis 10 Volumenprozent der Emulsion vorliegt und die dispergierte Phase der Emulsion bildet.

5. Emulsion nach einem der Ansprüche 1 bis 4, wobei der flüssige Kohlenwasserstoff einen Siedepunkt von 190 bis 480°C besitzt.

6. Emulsion nach einem der Ansprüche 1 bis 5, wobei das Blockcopolymer einen Einzelblock aus Polystyrol und einen Einzelblock aus Polyether umfaßt.

7. Emulsion nach einem der Ansprüche 1 bis 6, wobei das Blockcopolmyer wenigstens zwei Blöcke aus Polystyrol oder wenigstens zwei Blöcke aus Polyether umfaßt.

8. Emulsion nach Anspruch 6 oder 7, wobei das Gewichtsverhältnis von Polystyrol zu Polyether 1:5 bis 5:1 beträgt.

9. Emulsion nach einem der Ansprüche 6 bis 8, wobei der (die) Polyetherblock(-blöcke) einenb n-Wert von 110 bis 340 besitzt (besitzen).

10. Emulsion nach einem der Ansprüche 6 bis 9, wobei der (die) Polyetherblock(-blöcke) vor der Verbindung mit dem Styrolmonomer an einem Ende verestert ist (sind).

11. Emulsion nach einem der Ansprüche 1 bis 4,

wobei es sich bei dem (den) Polymerblock(-blöcken) A um ein Polymer aus Butadien oder Isopren handelt.

12. Emulsion nach einem der Ansprüche 1 bis 5, wobei es sich bei dem (den) Polymerblock(-blöken) B um ein Polymer aus Vinylacetat, Vinylalkohol oder einem Alkylmethacrylat handelt.

13. Emulsion nach einem der Ansprüche 1 bis 12, umfassend weiterhin ein Kupplungsmittel, das in der kontinuierlichen Phase der Emulsion löslich und in deren dispergierten Phase überwiegend unlöslich ist und welches mit dem (den) Polymerblock(-blöcken) des Copolymeren, das durch die kontinuierliche Phase der Emulsion solvatisiert ist, kuppelt.

14. Emulsion nach Anspruch 13, wobei der Emulgator und das Kupplungsmittel in einem Gewichtsverhältnis von 1:3 bis 3:1 vorliegen.

15. Emulsion nach Anspruch 13 oder 14, wobei das Kupplungsmittel ein Butadien-Styrol-, Ethylenoxid-Vinylacetat- oder Ethylenoxid - Vinylalkohol - Copolymer ist.

16. Emulsion nach Anspruch 15, wobei das Kupplungsmittel ein Butadien - Styrol - Copolymer mit einem Molekulargewicht von 50 000 bis 500 000 ist.

17. Emulsion nach Anspruch 15 oder 16, wobei das Gewichtsverhältnis von Butadien zu Styrol in dem Copolymer des Kupplungsmittels wenigstens 2:1 beträgt.

18. Emulsion nach einem der Ansprüche 1 bis 17, wobei der Emulgator in einer Menge von 0,1 bis 1% w/v der Emulsion und das Kupplungsmittel, falls vorhanden, uc einer Menge von, 0,1 bis 0,5% w/v der Emulsion vorliegt.

19. Emulgatorzubereitung, die zur Bildung einer Emulsion, umfassend eine einen flüssigen Kohlenwasserstoff umfassende Phase und eine Wasser und/oder Alkohol umfassende Phase geeignet ist, umfassend einen Emulgator nach einem der Ansprüche 1 bis 12 und ein Kupplungsmittel nach einem der Ansprüche 13 bis 17.

**Revendications**

1. Une émulsion consistant en une phase comprenant un hydrocarbure liquide, une phase comprenant un alcool ou un alcool et de l'eau et un émulsifiant, caractérisée en ce que l'émulsifiant est un copolymère comprenant au moins une séquence (A) consistant en un polymère de:

(i) un styrène facultativement substitué au noyau, ou
(ii) un diène conjugué,

et au moins un séquence (B) comprenant:

(i) un polyéther de formule $H-(-OR-)_n OH$, dans laquelle R est un reste bivalent d'hydrocarbure aliphatique ayant de 1 à 4 atomes de carbone et n est un entier de 4 à 4 000, ou
(ii) un polymère d'une oléfine polaire, la polarité de l'oléfine étant telle que son polymère est solvaté par l'eau et/ou l'alcool.

2. Une émulsion consistant en une phase comprenant une essence ayant un point d'ébullition de moins de 190°C, un kérosène ayant un point d'ébullition de 190 à 230°C, un carburant Diesel ayant un point d'ébullition de 230 à 315°C, un gazole ayant un point d'ébullition de 315 à 480°C, ou un hydrocarbure liquide ayant un point d'ébullition supérieur à 480°C, une phase comprenant de l'eau et/ou un alcool et un émulsifiant, caractérisée en ce que l'émulsifiant est un copolymère séquencé comprenant au moins une séquence (A) comprenant un polymère de:

(i) un styrène facultativement substitué au noyau ou
(ii) un diène conjugué,

et au moins une séquence (B) comprenant

(i) un polyéther de formule $H-(-OH-)_n OH$, dans laquelle R est un reste bivalent d'hydrocarbure aliphatique ayant de 1 à 4 atomes de carbone et n est un entier de 4 à 4 000, ou
(ii) un polymére d'une oléfine polaire, la polarité de l'oléfine étant telle que son polymère est solvaté par l'eau et/ou l'alcool.

3. Une émulsion selon la revendication 1 ou 2, dans laquelle la phase comprenant de l'eau et/ou un alcool qui contient de 0 à 10% en volume d'eau.

4. Une émulsion selon l'une quelconque des revendication 1 à 3, dans laquelle la phase comprenant de l'eau et/ou un alcool est pratiquement exempte d'alcool, elle est présente en quantitée de 1 à 10% en volume de l'émulsion et forme la phase dispersée de ladite émulsion.

5. Une émulsion selon l'une quelconque des revendications 1 à 4, dans laquelle l'hydrocarbure liquide a un point d'ébullition de 190 à 480°C.

6. Une émulsion selon l'une quelconque des revendications 1 à 5, dans laquelle le copolymère séquencé comprend une seule séquence de polystyrène et une seule séquence de polyéther.

7. Une émulsion selon l'une quelconque des revendications 1 à 6, dans laquelle le copolymère séquencé comprend au moins deux séquences de polystyrène ou au moins deux séquences de polyéther.

8. Une émulsion selon la revendication 6 ou 7, dans laquelle la rapport pondéral du polystyrène au polyéther est de 1:5 à 5:1.

9. Une émulsion selon l'une quelconque des revendications 6 à 8, dans laquelle la ou les séquences de polyéther ont une valeur n de 110 à 340.

10. Une émulsion selon l'une quelconque des revendications 6 à 9, dans laquelle la ou les séquences de polyéther sont estérifiés à une extrémité avant la liaison avec le styrène monomère.

11. Une émulsion selon l'une quelconque des

revendications 1 à 4, dans laquelle la ou les séquences A sont un polymère de butadiène ou d'isoprène.

12. Une émulsion selon l'une quelconque des revendications 1 à 5, dans laquelle la ou les séquences de polymère B sont un polymère d'acétate de vinyle, d'alcool vinylique ou d'un méthacrylate d'alkyle.

13. Une émulsion selon l'une quelconque des revendications 1 à 12, qui comprend en outre un agent de couplage qui est soluble dans la phase continue de l'émulsion et pratiquement insoluble dans sa phase dispersée et qui se combine avec la ou les séquences de polymère copolymère qui est solvaté par la phase continue de l'émulsion.

14. Une émulsion selon la revendication 13, dans laquelle l'émulsifiant et l'agent de couplage sont présents dans un rapport pondéral de 1:3 à 3:1.

15. Une émulsion selon la revendication 13 ou 14, dans laquelle l'agent de couplage est un copolymère butadiène-styrène, un copolymère oxyde d'éthylène-acétate de vinyle ou un copolymère oxyde d'éthylène-alcool vinylique.

16. Une émulsion selon la revendication 15, dans laquelle l'agent de couplage est un copolymère butadiène-styrène ayant un poids moléculaire de 50 000 à 500 000.

17. Une émulsion selon la revendication 15 ou 16, dans laquelle de rapport pondéral du butadiène au styréne dans le copolymère de l'agent de couplage est d'au moins 2:1.

18. Une émulsion selon l'une quelconque des revendications 1 à 17, dans laquelle l'émulsifiant est présent en quantité de 0,1 à 1% en poids/volume de l'émulsion et l'agent de couplage, le cas échéant, est en quantité de 0,1 à 0,5% en poids/volume de l'émulsion.

19. Une préparation émulsifiante appropriée pour former une émulsion comprenant une phase comprenant un hydrocarbure liquide et une phase comprenant de l'eau et/ou un alcool, qui comprend un émulsifiant tel que défini à l'une quelconque des revendications 1 à 12 et un agent de couplage tel que défini à l'une quelconque des revendications 13 à 17.